# EUROPEAN PATENT SPECIFICATION

(11) **EP 2 136 382 B1**
(45) Date of publication and mention of the grant of the patent: **30.10.2013**
(21) Application number: 08158505.1
(22) Date of filing: 18.06.2008
(51) Int. Cl.: H01H 33/55, H01H 33/666, H02H 9/02

(54) **Apparatus for automatic disconnection of current limiter**
Vorrichtung zur automatischen Trennung von einem Strombegrenzer
Appareil pour déconnexion automatique de limiteur de courant

(43) Date of publication of application: 23.12.2009
(73) Proprietor: Applied Superconductor Ltd., Blyth Northumberland NE24 3AG (GB)
(72) Inventor: Klaus, David, Blyth, Northumberland NE24 3AG (GB)
(74) Representative: Vinsome, Rex Martin

(56) References cited:
- EP-A- 1 089 031
- DE-A1- 3 844 053
- DE-A1- 4 330 410
- US-A- 2 553 291

## Description

### FIELD OF THE INVENTION

The present invention relates to apparatus for disconnecting current limiters, and relates particularly to apparatus for disconnecting current fault limiters utilising superconducting components maintained at a low temperature by immersion in a cooling medium, typically liquid nitrogen.

### BACKGROUND OF THE INVENTION

Fault-current limiters have been implemented using superconducting material to carry the current in an electricity supply network. Such networks normally are expected to carry currents of a few hundred amperes, but if a short-circuit (fault) occurs, the current rises to levels which can be several tens of thousands of amperes. When a fault occurs, the current density in the superconducting material exceeds the critical current density of the material, which ceases to be superconducting and becomes resistive. This process is known as quenching. The presence of resistance in the circuit causes the current to be reduced, or "limited", reducing the potentially damaging effects of excessively high currents in the network.

Networks for the transmission and distribution of electricity are generally three-phase, so three conductors are required and for each of said three conductors, current-limiting means must be provided. Typically a superconducting fault-current limiter will comprise three limiters as described above, housed either in a single vessel or in a plurality of vessels. In the following, it should be assumed that the means described to interrupt current in the limiter be duplicated as necessary in a multi-phase limiter.

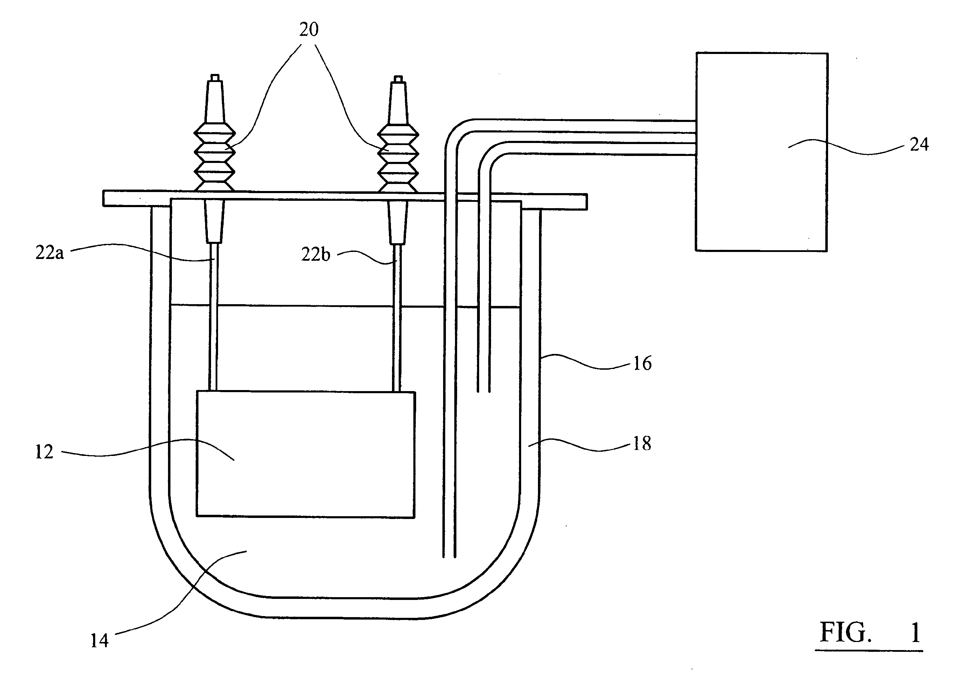

A typical fault current limiter **10** is shown in **Figure 1****.** The current limiting components **12** are made entirely or in part from superconducting material and are immersed in a liquid coolant (cryocoolant) **14** which is contained in a thermally insulated vessel **16.** The thermal insulation of the vessel **16** is typically provided by a vacuum layer **18** surrounding the volume containing the cryocoolant **14.** The vacuum-insulated vessel **16** is also sealed from the external atmosphere and is designed to withstand a predetermined change of the internal pressure. The vessel **16** may also be fitted with automatic pressure relief valves (not shown) because, in the event of a fault current, the "quenching" superconducting material **12** generates sufficient heat to boil the cryocoolant **14** in its vicinity causing a pressure rise inside the vessel **16.** Thermally insulated bushings **20** may be used to allow the current leads **22** to pass into the vessel causing minimal heat loss. A cooling machine **24** ensures that the cryocoolant **14** is kept at a sufficiently low temperature so that the superconducting parts 12 maintain a superconducting state in the absence of fault current.

At the present time it is difficult to design current limiting parts to be able to carry the limited fault-current for time periods exceeding a few hundred milliseconds without excessive heating which has two consequences (1) the temperature of the current limiting parts rises to an extent that there is a risk of said parts becoming damaged and (2) the liquid coolant reaches its boiling temperature, causing the pressure in the vessel containing the superconducting parts to rise.

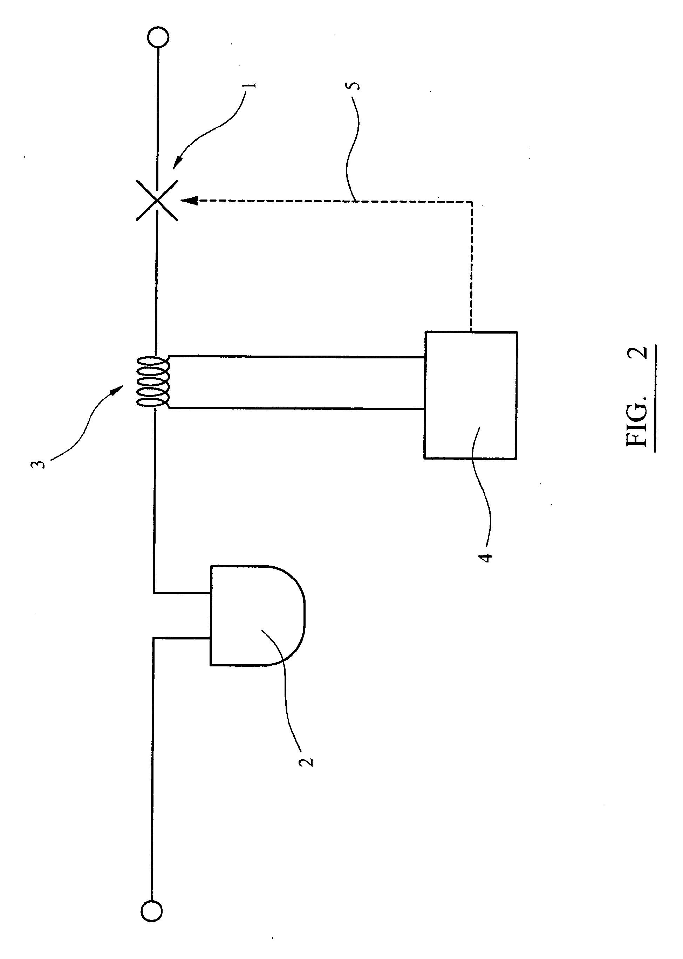

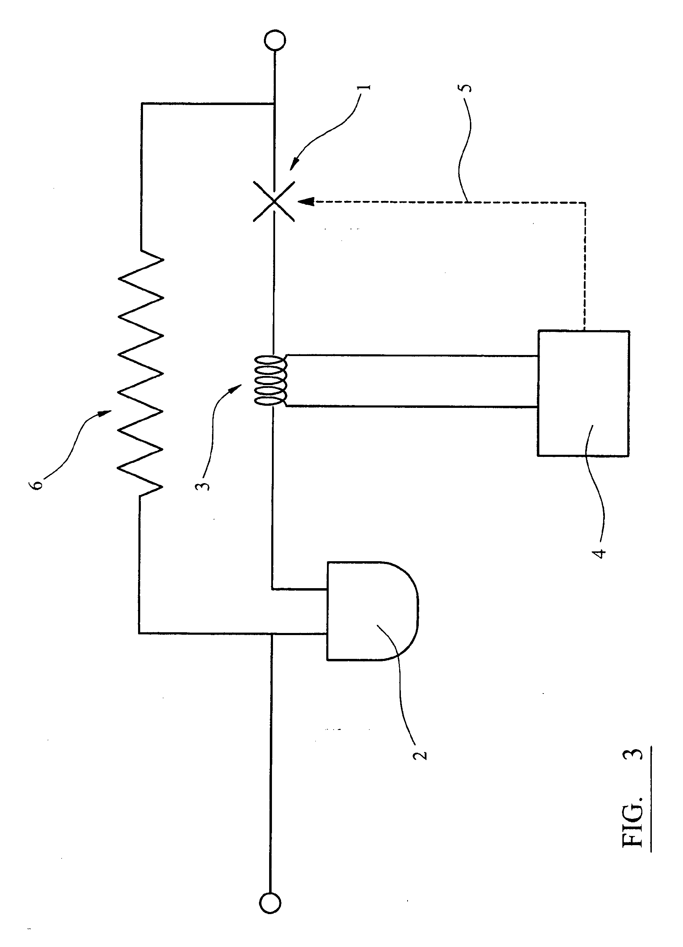

Means to prevent the above are known. A typical arrangement is shown in **Figure 2**, in which a circuit breaker **1** is connected in series with a superconducting fault current limiter (SFCL) **2**. A current transformer **3** is provided between the SFCL **2** and the circuit breaker **1**, which causes an overcurrent relay **4** to provide a signal **5** tripping the circuit breaker **1**. If necessary, a parallel impedance **6** of sufficient dimensions to withstand the current may be arranged as shown in **Figure 3**, allowing limited fault-current to continue to flow. This may be desirable to assure correct operation of protective devices in the network.

There is however a finite risk that the series-connected circuit-breaker will fail to operate. This could be due to failure of components in any stage of the process by which the circuit-breaker is made to trip. The process includes (i) current measurement, (ii) determination that the current is abnormal (fault-current), (iii) generation of a signal to trip the circuit-breaker, (iv) operation of the circuit-breaker tripping solenoid, (v) release of the circuit-breaker tripping catch, (vi) healthy operation of the circuit-breaker opening mechanism etc. The result of the circuit-breaker failing to open and interrupt the fault current is that current continues to flow through the current limiting parts of the fault-current limiter, giving rise to boiling of the cryocoolant and continuing heating of said current limiting parts. Thermal damage to said parts could result, rendering the limiter unusable subsequently and potentially leading to loss of the cryocoolant due to excessive pressure-rise within the vessel.

DE 3844053 discloses a current limiter apparatus according to the preamble of claim 1.

### SUMMARY OF THE INVENTION

Preferred embodiments of the present invention seek to overcome one or more of the above disadvantages of the prior art.

According to the present invention there is provided a current limiter apparatus comprising :
(i) at least one first conducting lead;
(ii) at least one second conducting lead;
(iii) at least one superconducting element connected between at least one respective said first conducting lead and at least one respective said second conducting lead;
(iv) at least one vessel adapted to enclose at least one said superconducting element immersed in cooling liquid therein;
(v) at least one actuator device comprising respective actuator means;
characterised in that the current limiter apparatus further comprises at least one circuit breaker utilising a magnetic bistable latching mechanism, and that the actuator means comprises at least one actuator rod adapted to engage the at least one circuit breaker and wherein said magnetic bistable latching mechanism is adapted to be operated through an axial movement of said actuator rod to cause the at least one circuit breaker to interrupt the flow of current through at least one said first and/or at least one said second conducting lead in response to an increase in pressure in at least one said vessel above a predetermined threshold value.

By providing an actuator device for the current limiter apparatus that is capable of causing at least one circuit breaker to interrupt the current flow in response to an increase in pressure inside a current limiter vessel, this provides the advantage that the circuit breaker is operated as a direct consequence of the pressure increase inside the vessel, therefore improving the response time of the circuit breaker as well as minimizing the risk of structural damage to the current limiter apparatus. Furthermore, the actuator device is very simple in design, allowing currently available current limiter apparatus to be easily updated. Also, the actuator device is more hard wearing and less costly to manufacture.

The actuator rod may be adapted to engage at least one circuit breaker only in a direction interrupting the flow of the current through the corresponding said at least one first and/or second conducting lead.

This provides the advantage that once the circuit breaker is tripped and the current flow is interrupted, the circuit breaker cannot be automatically set back into its conducting state, therefore minimizing the risk of further damage and improving the safety of the current limiter apparatus.

The actuator means may comprise at least one bellows adapted to expand or contract in response to said increase in pressure.

The actuator means may comprise at least one cylinder and at least one piston slidably received and adapted to move axially within said cylinder in response to said increase in pressure.

This provides the advantage of at least two simple means capable of transforming the pressure change inside the vessel into a longitudinal movement of the actuator rod, which is also hard wearing and easy to manufacture.

The at least one said circuit breaker utilises a magnetic bistable latching mechanism adapted to be tripped through said axial movement of said actuator rod.

Magnetic bistable latching mechanisms provide a very low maintenance solution utilising permanent magnet technology that is self-sufficient and adapted to directly respond (trip) to movement of its operating shaft, therefore allowing it to be directly coupled to the actuator rod of the present invention.

The circuit breaker may comprise a vacuum switch adapted to be tripped through said axial movement of said actuator rod.

### BRIEF DESCRIPTION OF THE DRAWINGS

A preferred embodiment of the present invention will now be described, by way of example only and not in any limitative sense, with reference to the accompanying drawings, in which:
Figure 1 shows a sectional view of a known current limiter apparatus;
Figure 2 shows a first schematic arrangement of a known circuit breaker and current limiter apparatus;
Figure 3 shows a second schematic arrangement of a known circuit breaker and current limiter apparatus;
Figure 4 shows a partial sectional view of an actuator device of a first embodiment of the present invention in a non-tripped state. The actuator is coupled to a plurality of vacuum interrupters shown as 150a and 150b; this is representative only. Normally there will be three or six vacuum interrupters in a three phase implementation of the invention;
Figure 5 shows a partial sectional view of the actuator device of Figure 4 in a tripped state;
Figure 6 shows a partial sectional view of an actuator device of a second embodiment of the present invention in the non-tripped state;
Figure 7 shows a sectional view of a magnetic bistable latching mechanism of the device of Figure 6 in the non-tripped state;
Figure 8 shows a sectional view of the bistable magnetic latching mechanism of Figure 7 in a state between the non-tripped state and the tripped state;
Figure. 9 shows a close-up sectional view of the bistable magnetic latching mechanism of Figure 7 in the tripped state;
Figure 10 shows a partial sectional view of the device of Figure 6 using a bistable magnetic latching mechanism having two additional solenoids;
Figure 11 shows a sectional view of the device of Figure 4 using a single vacuum switch as circuit breaker; and
Figure 12 shows a sectional view of the device of Figure 4 using two vacuum switches as circuit breaker.

### DETAILED DESCRIPTION OF EMBODIMENTS

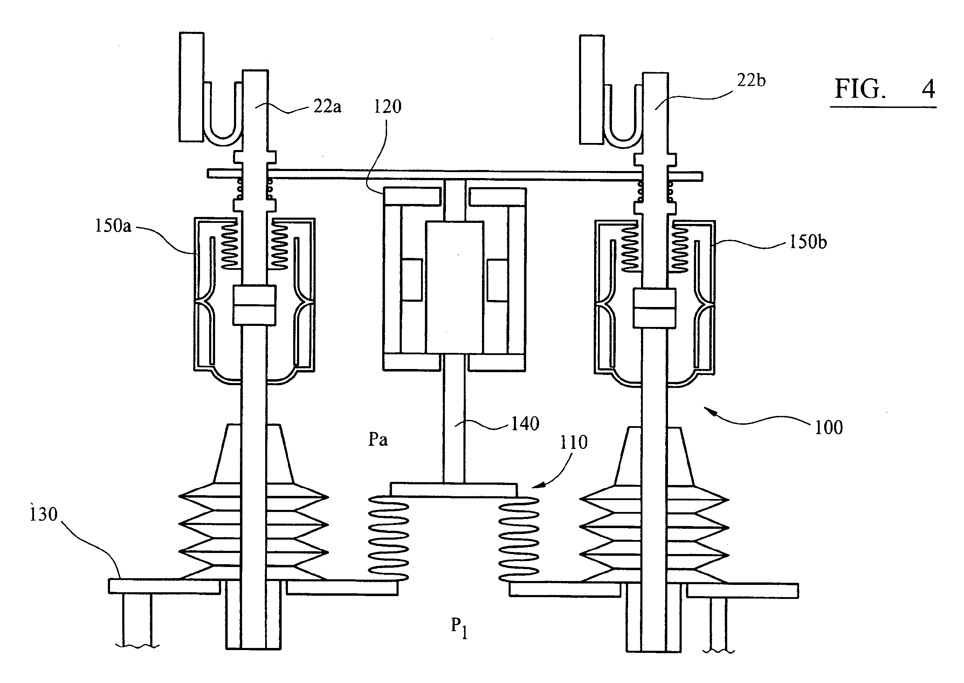

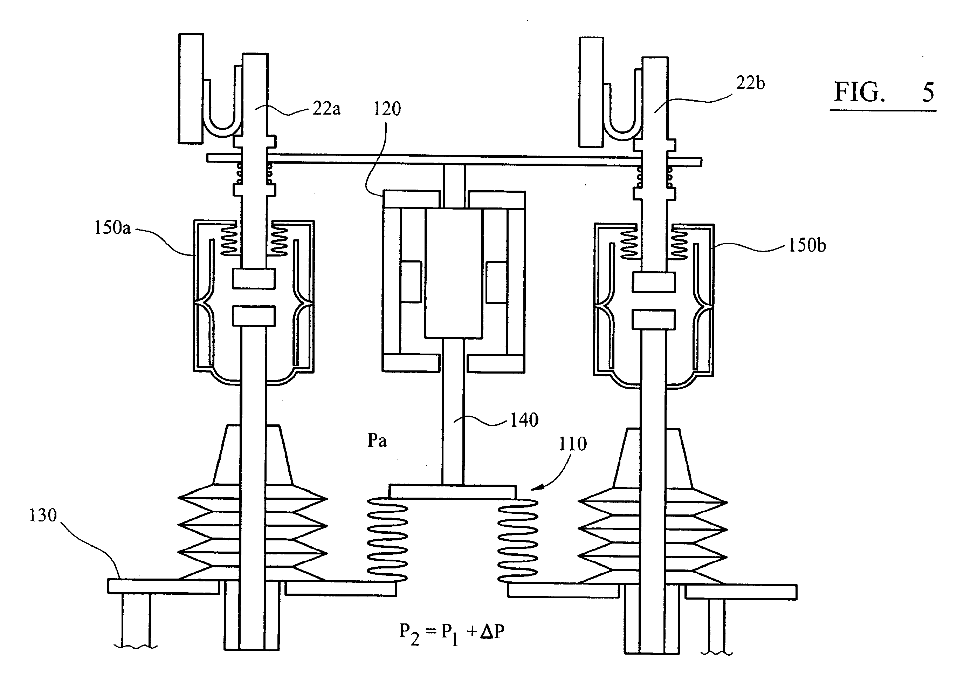

Referring to **Figure 4** and **5****,** an actuator device **100** for a current limiter apparatus **12** embodying the present invention includes actuator means **110,** e.g. bellows, adapted to cause at least one circuit breaker to interrupt the flow of current through a first conducting lead **22a** and a second conducting lead **22b** in response to an increase in pressure Δ**P** in the vessel **16** above a predetermined threshold value. In **Figure 4****,** the actuator device **100** of the present invention is shown in a state when no fault current is present. In particular, a bellows **110** is arranged in the wall of vessel **16** or a lid **130** of the vessel **16** such that the bellows **110** is acted upon on the outside of vessel **16** by the atmospheric pressure **Pa** and on the inside of the vessel **16** by gaseous cryocoolant having a pressure **P1.**

If the pressure **P1** rises significantly above the atmospheric pressure **Pa,** a force will be applied to bellows **110.** This force is applied to the mechanism **120** of the circuit breaker through an actuator rod **140.** However, the movement of the circuit breaker mechanism is prevented unless the force exceeds a predetermined level. The restraining force which must be overcome to allow movement of the circuit breaker mechanism may be produced in a variety of ways. In this particular example, the restraining force is provided by a permanent magnet or magnets within the bistable magnetic latching mechanism **120.** The bellows **110** is arranged to move a sufficient distance to cause the mechanism **120** of circuit breaker to directly open the circuit-breaking contacts **150a** and **150b** as shown in **Figure 5****.** The mechanism of circuit breaker **120** maintains the contacts **150a, 150b** in the open position until it is moved back in its non-tripped position.

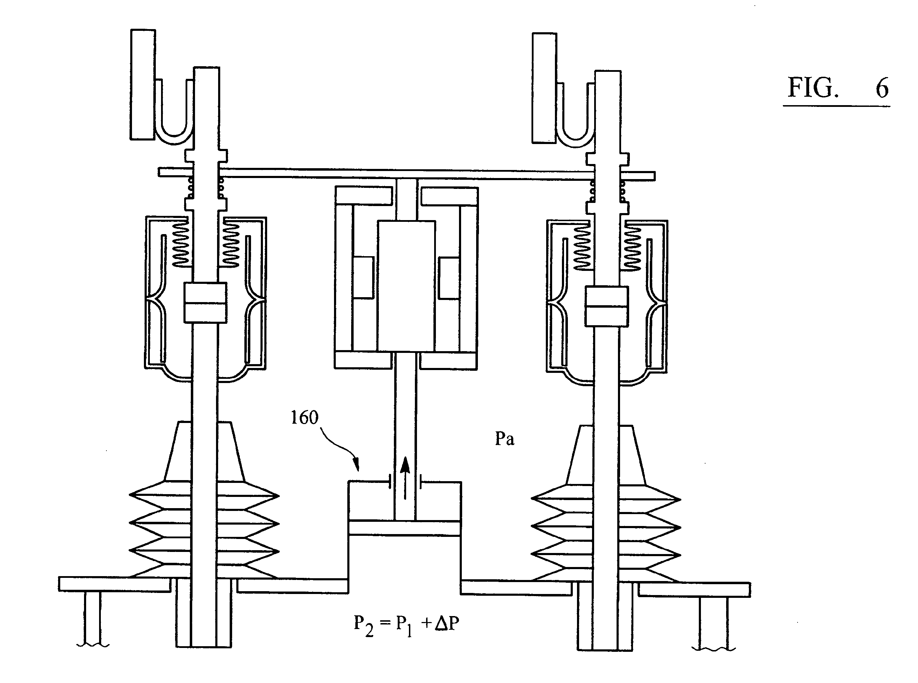

As shown in **Figure 6****,** instead of bellows **110,** a cylinder and piston arrangement **160** can be used to transform the increase in pressure inside the vessel **16** into sufficient longitudinal movement of the actuator rod **140.**

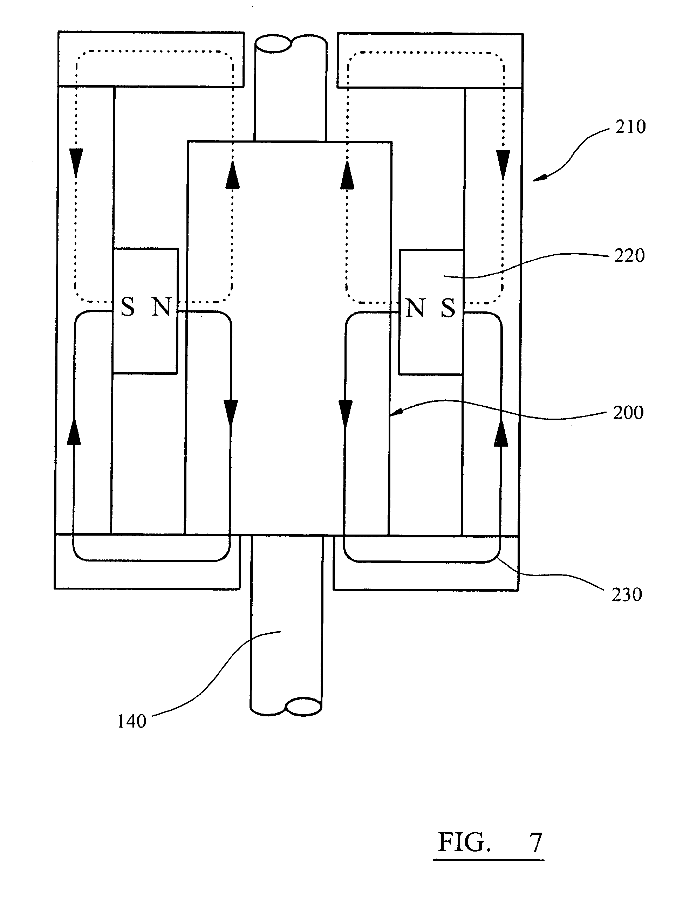

The operation of the bistable magnetic latching mechanism **120** is described with reference to **Figures 7****,** 8 and **9****.**

In its non-tripped state a ferromagnetic core **200** is attached to the lower end of the ferromagnetic yoke **210,** allowing the magnetic field **230** of the permanent magnet **220** to be formed in a circuit between the lower end of the ferromagnetic yoke **210,** the lower part of the ferromagnetic core and the permanent magnet **220,** providing an attractive force of predetermined magnitude between the core **200** and the yoke **210.**

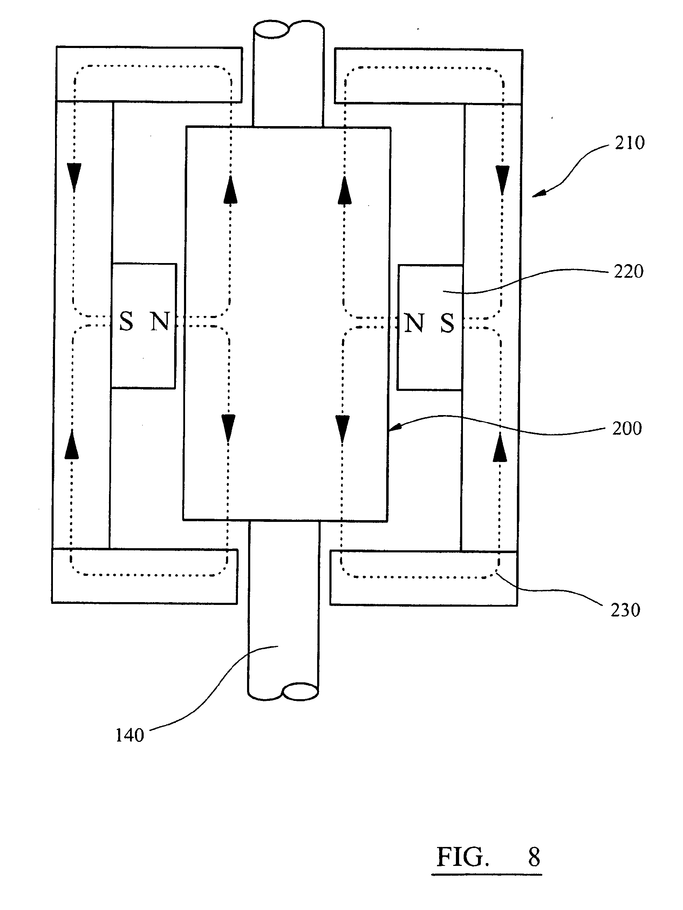

A longitudinal force applied in the upward direction to the magnetic core **200** via the non-magnetic actuator rod **140** will not result in upward movement of the core **200** unless the longitudinal force is larger than the attractive force between the core **200** and the yoke **210.** When the pressure increase inside the vessel 16 exceeds a predetermined value, the longitudinal force of the actuator rod will be sufficient to oppose the attractive force between the core **200** and the yoke **210.** The core **200** therefore starts to move and the magnetic field **230** diminishes quickly due to the higher reluctance introduced into the magnetic circuit by the air gap between the lower end of the core **200** and the yoke **210,** as shown in **Figure 8****.** When the core **200** has moved sufficiently so that the air gap between its lower face and the upper face of the lower limb of the yoke **210** is greater than the air gap between its upper face and the lower face of the upper limb of the yoke **210,** the attractive force across the smaller, upper air gap exceeds the attractive force across the longer, lower air gap, propelling the core **200** upwards and attaching it to the upper end of the yoke **210.**

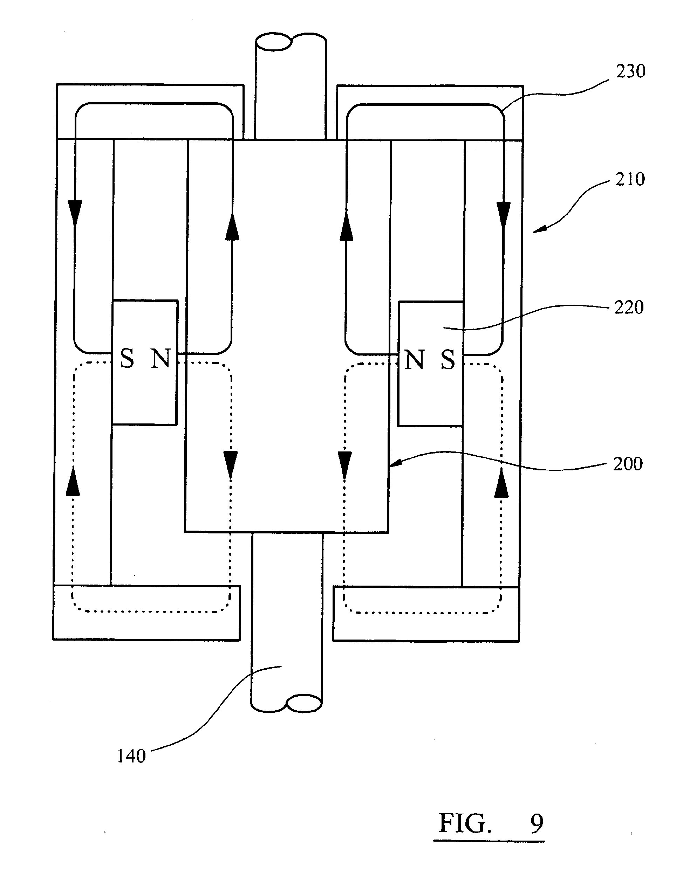

**Figure 9** shows the core **200** attached to the upper end of the yoke **210** allowing the magnetic field **230** of the permanent magnet **220** to be formed in a circuit between the upper end of the ferromagnetic yoke **210,** the upper part of the ferromagnetic core **200** and the permanent magnet **220,** therefore providing an attractive force between the core **200** and the yoke **210.** Thus, the contacts **150a, 150b** of the circuit-breaker **120** are secured in the open position.

In order to prevent automatic movement of the circuit breaker **120** into its non-tripped position when the pressure decreases due to cooling of the cryocoolant **14,** the actuator rod is only adapted to engage the core **200** of the circuit breaker **120** in a direction that moves the contacts **150a** and **150b** into its open position.

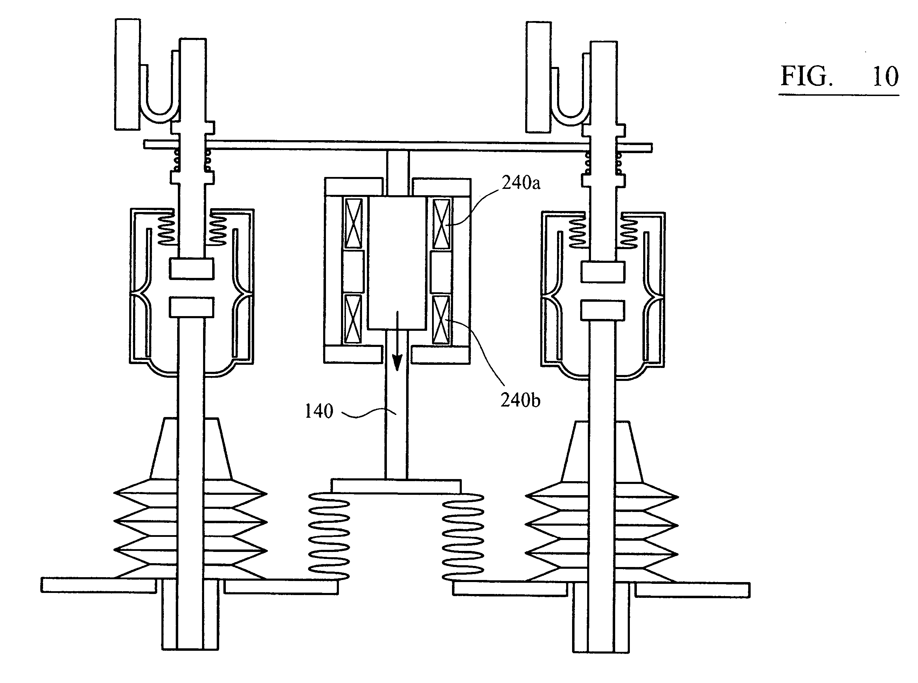

As shown in **Figure 10****,** the function of the bistable magnetic latching mechanism can be enhanced by including additional solenoid coils **240a** and **240b.**

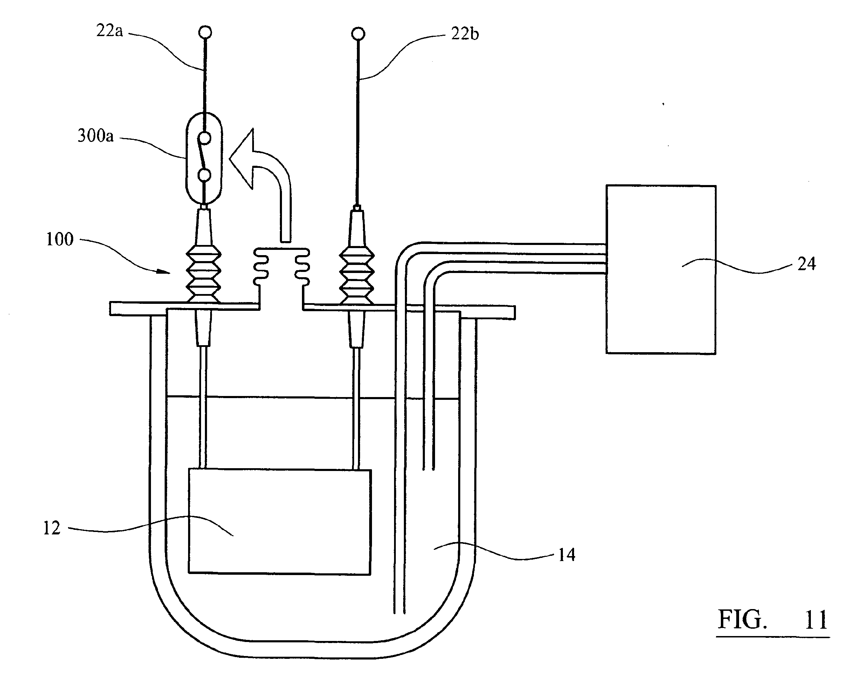

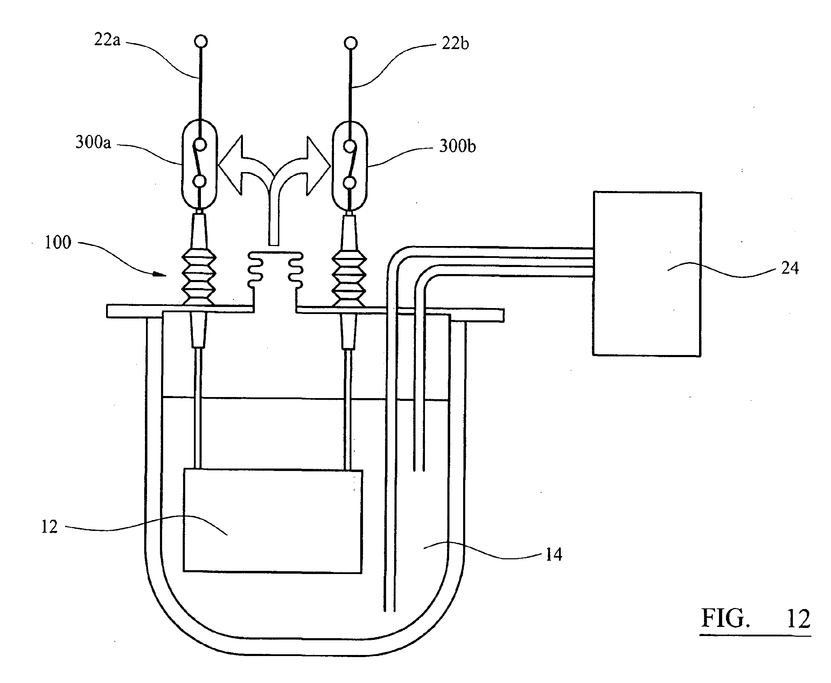

In addition, one or two vacuum switches **300a,** 300b may be used to interrupt the current flow through the first conducting lead **22a** and/or the second conducting lead **22b** as shown in **Figures 11** and **12****.**

It will be appreciated by persons skilled in the art that the above embodiments have been described by way of example only, and not in any limitative sense, and that various alterations and modifications are possible without departure from the scope of the invention as defined by the appended claims.

## Claims

1. A current limiter apparatus comprising :
(i) at least one first conducting lead (22a);
(ii) at least one second conducting lead (22b);
(iii) at least one superconducting element (12) connected between at least one respective said first conducting lead and at least one respective said second conducting lead;
(iv) at least one vessel (16) adapted to enclose at least one said superconducting element immersed in cooling liquid therein; and
(v) at least one actuator device (100) comprising respective actuator means (110) ;
**characterised in that** the current limiter apparatus further comprises at least one circuit breaker utilising a magnetic bistable latching mechanism (120), and that the actuator means (110) comprises at least one actuator rod (140) adapted to engage the at least one circuit breaker and wherein said magnetic bistable latching mechanism (120) is adapted to be operated through an axial movement of said actuator rod (140) to cause the at least one circuit breaker to interrupt the flow of current through at least one said first and/or at least one said second conducting lead in response to an increase in pressure in at least one said vessel above a predetermined threshold value.

2. An apparatus according to claim 1, wherein said actuator rod is adapted to engage at least one circuit breaker only in a direction interrupting the flow of the current through the corresponding said at least one first and/or second conducting lead.

3. An apparatus according to claim 1 or 2, wherein said actuator means comprises at least one bellows adapted to expand or contract in response to said increase in pressure.

4. An apparatus according to any one of the preceding claims, wherein said actuator means comprises at least one cylinder and at least one piston slidably received and adapted to move axially within said cylinder in response to said increase in pressure.

5. An apparatus according to any one of the preceding claims, wherein at least one said circuit breaker comprises a vacuum switch adapted to be tripped through said axial movement of said actuator rod.

## Patentansprüche

1. Strombegrenzungsvorrichtung, die Folgendes umfasst:
(i) wenigstens eine erste Leitung (22a);
(ii) wenigstens eine zweite Leitung (22b);
(iii) wenigstens ein supraleitendes Element (12), das zwischen wenigstens einer jeweiligen genannten ersten Leitung und wenigstens einer jeweiligen genannten zweiten Leitung angeschlossen ist;
(iv) wenigstens einen Behälter (16) zum Umschließen von wenigstens einem genannten supraleitenden Element, das in eine Kühlflüssigkeit darin eingetaucht ist; und
(v) wenigstens eine Antriebsvorrichtung (100), die jeweilige Antriebsmittel (110) umfasst;
**dadurch gekennzeichnet, dass** die Strombegrenzungsvorrichtung ferner wenigstens einen Leistungsschalter aufweist, der mit einem magnetischen bistabilen Rastmechanismus (120) arbeitet, und dadurch, dass das Antriebsmittel (110) wenigstens einen Antriebsstab (140) zum Eingreifen in den wenigstens einen Leistungsschalter aufweist, und wobei der genannte magnetische bistabile Rastmechanismus (120) so ausgelegt ist, dass er durch eine axiale Bewegung des genannten Antriebsstabs (140) betätigt wird, um zu bewirken, dass der wenigstens eine Leistungsschalter den Stromfluss durch wenigstens eine genannte erste und/oder wenigstens eine genannte zweite Leitung als Reaktion auf eine Zunahme des Drucks in wenigstens einem genannten Behälter über einen vorbestimmten Schwellenwert unterbricht.

2. Vorrichtung nach Anspruch 1, wobei der genannte Antriebsstab so ausgelegt ist, dass er in wenigstens einen Leistungsschalter nur in einer Richtung eingreift, die den Stromfluss durch die entsprechende genannte wenigstens eine erste und/oder zweite Leitung unterbricht.

3. Vorrichtung nach Anspruch 1 oder 2, wobei das genannte Antriebsmittel wenigstens einen Balg umfasst, der zum Ausdehnen und Zusammenziehen als Reaktion auf die genannte Druckzunahme ausgelegt ist.

4. Vorrichtung nach einem der vorherigen Ansprüche, wobei das genannte Antriebsmittel wenigstens einen Zylinder und wenigstens einen Kolben umfasst, der in dem genannten Zylinder gleitend aufgenommen wird und für eine axiale Bewegung darin als Reaktion auf die genannte Druckzunahme ausgelegt ist.

5. Vorrichtung nach einem der vorherigen Ansprüche, wobei wenigstens ein genannter Leistungsschalter einen Vakuumschalter umfasst, der so ausgelegt ist, dass er durch die genannte axiale Bewegung des genannten Antriebsstabs ausgelöst wird.

## Revendications

1. Appareil limiteur de courant comprenant :
(i) au moins un premier fil conducteur (22a) ;
(ii) au moins un second fil conducteur (22b) ;
(iii)au moins un élément supraconducteur (12) connecté entre au moins un dit premier fil conducteur respectif et au moins un dit second fil conducteur respectif ;
(iv) au moins une cuve (16) adaptée pour renfermer au moins un dit élément supraconducteur immergé dans du liquide de refroidissement dans celle-ci ; et
(v) au moins un dispositif d'actionnement (100) comprenant des moyens d'actionnement respectifs (110) ;
**caractérisé en ce que** l'appareil limiteur de courant comprend en outre au moins un disjoncteur utilisant un mécanisme de verrouillage bistable magnétique (120), et que les moyens d'actionnement (110) comprennent au moins une tige d'actionnement (140) adaptée pour mettre en prise l'au moins un disjoncteur et où ledit mécanisme de verrouillage bistable magnétique (120) est adapté pour être actionné par un mouvement axial de ladite tige d'actionnement (140) pour faire en sorte que l'au moins un disjoncteur interrompe le flux de courant à travers au moins un dit premier et/ou au moins un dit second fil conducteur en réponse à une augmentation de pression dans au moins une dite cuve au-dessus d'une valeur de seuil prédéterminée.

2. Appareil selon la revendication 1, où ladite tige d'actionnement est adaptée pour mettre en prise au moins un disjoncteur uniquement dans une direction interrompant le flux de courant à travers ledit au moins un premier et/ou second fil conducteur correspondant.

3. Appareil selon la revendication 1 ou 2, où lesdits moyens d'actionnement comprennent au moins un soufflet adapté pour se dilater ou se contracter en réponse à ladite augmentation de pression.

4. Appareil selon une quelconque des revendications précédentes, où lesdits moyens d'actionnement comprennent au moins un cylindre et au moins un piston reçu de manière coulissante et adapté pour se déplacer axialement à l'intérieur dudit cylindre en réponse à ladite augmentation de pression.

5. Appareil selon une quelconque des revendications précédentes, où au moins un dit disjoncteur comprend un interrupteur à vide susceptible d'être déclenché par ledit mouvement axial de ladite tige d'actionnement.
